# EUROPEAN PATENT SPECIFICATION

(11) **EP 2 858 219 B1**
(45) Date of publication and mention of the grant of the patent: **05.12.2018**
(21) Application number: 13797737.7
(22) Date of filing: 29.05.2013
(51) Int. Cl.: H02K 13/00, H01R 39/22, H01R 39/26

(54) **CARBON BRUSH**
KOHLENSTOFFBÜRSTE
BALAI EN CARBONE

(30) Priority: 01.06.2012 JP 2012125673
(43) Date of publication of application: 08.04.2015
(73) Proprietor: Toyo Tanso Co., Ltd., Osaka-shi, Osaka 555-0011 (JP)
(72) Inventor: TAKUMA, Masayuki, Kagawa 769-0401 (JP)
(74) Representative: Glawe, Delfs, Moll
(86) International application number: PCT/JP2013/064860
(87) International publication number: WO 2013/180156

(56) References cited:
- EP-A1- 1 732 193
- GB-A- 805 176
- GB-A- 1 045 094
- GB-A- 2 389 358
- JP-A- S59 211 983
- JP-A- 2005 102 491
- JP-A- 2005 130 618
- US-A1- 2010 133 948
- Edward Field ET AL: "Phenolic Compounds from Petroleum Sources", , 1 April 1940 (1940-04-01), pages 489-496, XP055230550, DOI: 10.1021/ie50364a010 Retrieved from the Internet: URL:http://pubs.acs.org/doi/pdf/10.1021/ie 50364a010 [retrieved on 2015-11-23]
- K. B. Goldblum ET AL: "Vapor Pressure Data for Phenols", , 1 November 1947 (1947-11-01), pages 1474-1476, XP055230566, DOI: 10.1021/ie50455a017 Retrieved from the Internet: URL:http://pubs.acs.org/doi/pdf/10.1021/ie 50455a017 [retrieved on 2015-11-23]

## Description

### TECHNICAL FIELD

The present invention relates to a carbon brush used in commutator motors for washing machines and motors for electric power tools, for example.

### BACKGROUND ART

Conventionally, commutator motors have been used commonly in electric power tools or washing machines, for example. The structure of the motor is as follows. Contact portions of the divided commutator make sliding contact with a brush, and thereby, electric current is supplied from a power source to an armature around which coils are wound. As a result, the armature is rotated.

The just-mentioned motor has the problem of large rubbing noise because the brush and the commutator are in sliding contact with each other when the motor is operated. Another problem is that, due to spark discharge of the brush, a commutator film is produced excessively, causing a temperature rise of the brush (the motor) when electric current is applied thereto.

The following conventional brush has been proposed in order to inhibit sparks of the carbon brush. The brush is impregnated with a suspension of a lubricative synthetic oil and a liquid that is vaporized according to increase of the temperature of the motor (alcohol with a boiling point of 60°C to 130°C) so that the synthetic oil seeps out on the
sliding surface because of the pressure of the liquid vaporized according to the temperature. (See Patent Literature 1 shown below.)

### CITATION LIST

### Patent Literature

Patent Literature 1: Japanese Unexamined Patent Publication No. 2007-049894 A carbon brush according to the preamble of claim 1 is disclosed in EP 1 723 193 A1; similar brushes are disclosed in GP 2 389 358 A, US 2010/133 948 A1 and GP 805 176 A, respectively.

### SUMMARY OF INVENTION

### TECHNICAL PROBLEM

The proposal disclosed in Patent Literature 1 above has the configuration in which only the synthetic oil seeps out on the sliding surface, but this configuration is unable to inhibit sparks of the carbon brush sufficiently. Therefore, the conventional brush has such a problem that, because the commutator film is formed excessively, a temperature rise is caused when electric current is applied thereto, and also, rubbing noise is increased due to the increase in friction between the brush and the commutator.

Accordingly, it is an object of the present invention to provide a carbon brush that can sufficiently inhibit the temperature increase and the increase of rubbing noise that result from the excessive formation of the commutator film.

### SOLUTION TO PROBLEM

This object is achieved by a carbon brush as claimed in claim 1; the dependent claims are related to further developments of the invention.

### ADVANTAGEOUS EFFECTS OF INVENTION

The present invention achieves significant advantageous effects, such as inhibiting the temperature increase and also inhibiting the level of rubbing noise from increasing.

### BRIEF DESCRIPTION OF DRAWINGS

[Fig. 1] Fig. 1 is an illustrative view showing a method for measuring the noise level of a motor using a carbon brush.
[Fig. 2] Fig. 2 is an illustrative view showing a method for measuring the brush temperature of the carbon brush.
[Fig. 3] Fig. 3 is a graph showing the relationship between the number of cycles and the noise level in a present invention brush A and a comparative brush Z.
[Fig. 4] Fig. 4 is a graph showing the relationship between the number of cycles and the brush temperature in the present invention brush A and the comparative brush Z.

### DESCRIPTION OF EMBODIMENTS

The present invention provides a carbon brush including a carbon block substrate having pores in a surface thereof and an inner portion thereof, the carbon brush making sliding contact with a commutator provided in a motor, characterized by including: a suspension existing in the pores and comprising an oil and a petroleum-based solvent having a boiling point higher than a temperature of the carbon brush at a time in which the motor is in operation.

The just-mentioned suspension exists in such a state that particles of oil are dispersed in a petroleum-based solvent and flowability is retained. At the stage when the carbon brush has been produced initially, the suspension exists in the pores formed in the surface and inner portion of the carbon block substrate, but on the other hand, after the motor has started to operate, the suspension is gradually discharged from the inside of the pores to the contact portions between the carbon brush and the commutator. When the suspension is discharged from the inside of the pores, the oil improves the lubricity of the carbon brush at the contact portions between the carbon brush and the commutator, and serves to reduce rubbing noise. Nevertheless, if the oil alone exists at the contact portions between the carbon brush and the commutator, the commutator film is formed excessively due to the sparks of the brush, as described above. Consequently, problems arise that the temperature of the brush increases greatly when electric current is applied and that rubbing noise cannot be reduced sufficiently.

However, when the suspension contains a petroleum-based solvent as in the foregoing configuration, the petroleum-based solvent cleans away the oil on the commutator surface appropriately and prevents the commutator film from forming excessively. As a result, the temperature of the brush can be inhibited from increasing when electric current is applied thereto, and moreover, rubbing noise is reduced. In addition, because the boiling point of the petroleum-based solvent is higher than the temperature of the carbon brush at a time in which the motor is in operation, it is possible to inhibit such an event that the petroleum-based solvent is evaporated rapidly and the above-described advantageous effects cannot be obtained. In other words, the above-described advantageous effects are obtained over a long period of time.

In addition, since the suspension filled in the pores of the carbon block substrate is kept to have flowability, the suspension is moved by external pressure (which is generated due to the acceleration resulting from an increase or decrease of the rotational speed or due to a centrifugal force). Therefore, a vibration absorbing effect is obtained by a dashpot effect. As a result, the brush is inhibited from vibrating and brought into contact with the commutator stably. Therefore, rubbing noise is reduced more effectively.

For the above-mentioned oil, one in solid form or one in semi-solid form is used.

It is desirable that the proportion of the suspension be from 0.5 weight % to 6 weight % with respect to the carbon block substrate.

If the proportion of the suspension is less than 0.5 weight %, excessive formation of the commutator film cannot be inhibited sufficiently. Consequently, the advantageous effects of inhibiting the temperature increase of the brush and sufficiently reducing the rubbing noise cannot be obtained sufficiently. In addition, the vibration inhibiting effect by a dashpot effect is lessened. Therefore, also in this respect, rubbing noise may not be reduced sufficiently. On the other hand, if the proportion exceeds 6 weight %, the volume of the suspension increases greatly due to the temperature increase at the time of operation of the motor, causing the suspension to gush out. Consequently, the commutator and the surround area of the brush may be contaminated or damaged, or smoking may occur.

It is desirable that the proportion of the oil be from 3 weight % to 60 weight % with respect to the total amount of the suspension.

If the proportion of the oil is less than 3 weight % with respect to the total amount of the suspension, the lubricity of the carbon brush cannot be obtained sufficiently, and rubbing noise may not be reduced sufficiently. On the other hand, if the proportion exceeds 60 weight %, the oil on the surface of the commutator cannot be cleaned away sufficiently because the amount of the petroleum-based solvent is too low. Consequently, the commutator film may be formed excessively.

It is desirable that the petroleum-based solvent have a boiling point of from 140°C to 250°C.

The reason is as follows. If the boiling point of the petroleum-based solvent is less than 140°C, the boiling point of the petroleum-based solvent may become lower than the operating temperature of the motor. On the other hand, an organic solvent having a boiling point of higher than 250°C shows poor flowability at the operating temperatures of the motor, so the oil may not seep out sufficiently, or the cleaning effect may be lowered.

It is desirable that the vapor pressure of the petroleum-based solvent be 1 kPa or lower at 20°C.

If the vapor pressure at room temperature exceeds 1 kPa, the solvent may be volatilized quickly and may not remain in the substrate.

### EXAMPLES

Hereinbelow, the present invention will be described in further detail based on examples thereof. However, the carbon brush of the present invention is not limited by the description of the following examples.

### [EXAMPLE]

A carbon brush of the present invention was fabricated in the following manner.

First, graphite powder and pitch were mixed so that the proportion of the pitch became 50 weight % with respect to the total amount of the graphite powder. Next, the mixture was kneaded at a temperature higher than the melting point of the pitch, and thereafter, the kneaded material was cooled and pulverized to obtain a source material of 40 mesh pass. Next, this source material was press-formed using a press apparatus, and the formed material was high-temperature sintered under a non-oxidizing atmosphere to carbonize the binder. Thus, a carbon block substrate was obtained. Thereafter, this carbon block substrate was cut into predetermined dimensions, and then, a lead wire was attached to the carbon block substrate.

Subsequently, a suspension was impregnated into pores formed in the surface and inner portion of the carbon block substrate. Thereby, a carbon brush used in a motor for a washing machine was prepared.

The impregnation of the suspension was conducted in the following manner. First, the carbon block substrate was immersed in an impregnation solution comprising an oil and a petroleum-based solvent for 20 minutes, to impregnate the impregnation solution into the pores in the carbon block substrate. As the just-mentioned oil, a heat-resistant grease (one in which molybdenum disulfide as a lubricity improving agent was added at 3 weight % and bentonite clay as a thickening agent was added at 7 weight %) was used. As the just-mentioned petroleum-based solvent, a hydrocarbon-based solvent for industrial application (an isoparaffinic solvent [mineral spirit] having a boiling point of 190°C and a vapor pressure of 0.1-0.2 kPa at 20°C) was used. The proportion of the oil was set at 5 weight % with respect to the petroleum-based solvent. Next, excessive impregnation solution was degreased, and thereafter, the substrate was dried by through air drying at 50°C to remove excessive petroleum-based solvent. Through the above-described process, the suspension (a solution from which an excessive petroleum-based solvent contained in the impregnation solution has been removed) can be impregnated into the pores. When calculating from the weight change before and after the impregnation, the proportion of the suspension was 1.5 weight % with respect to the amount of the carbon block substrate.

The carbon brush fabricated in this manner is hereinafter referred to as a present invention brush A.

### [Comparative Example]

A carbon brush was fabricated in the same manner as described in Example above, except that the suspension was not impregnated in the pores formed in the surface and inner portion of the carbon block substrate.

The carbon brush fabricated in this manner is hereinafter referred to as a comparative brush Z.

### [Experiment]

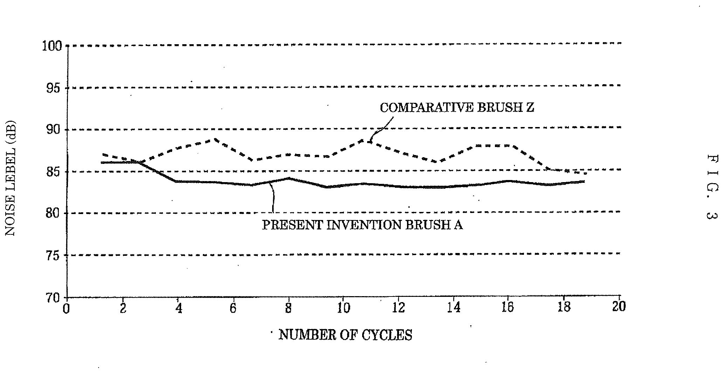

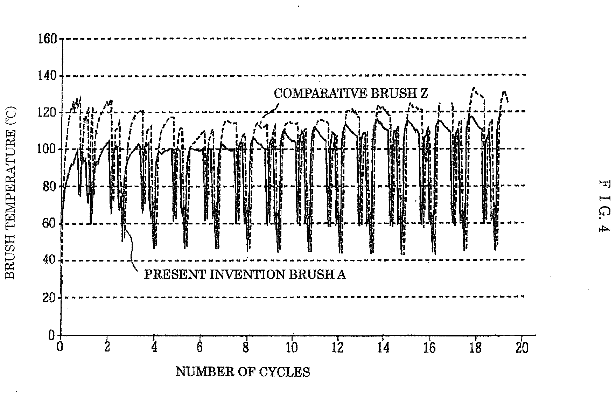

Each of the present invention brush A and the comparative brush Z prepared in the above-described manners was set in a commutator motor for a front-loading type washing machine, and the motors were operated on a test stand that reproduces the actual operating circumstances in a washing operation under the following conditions. The noise level and the temperature of the brush were measured for each of the motors in operation. The results are shown in Figs. 3 and 4.

### - Experiment Conditions

| Type of commutator: | Copper commutator |
|---|---|
| Number of revolution: | 730 rpm during washing (duration in one cycle: 60 minutes) |
| | 16,000 rpm during spinning (duration in one cycle: 10 minutes) |
| One cycle: | 80 minutes |
| Brush pressure: | 58 KPa |
| Measurement time: | 19 hours (14 cycles) |

### - Method of Measuring Noise Level

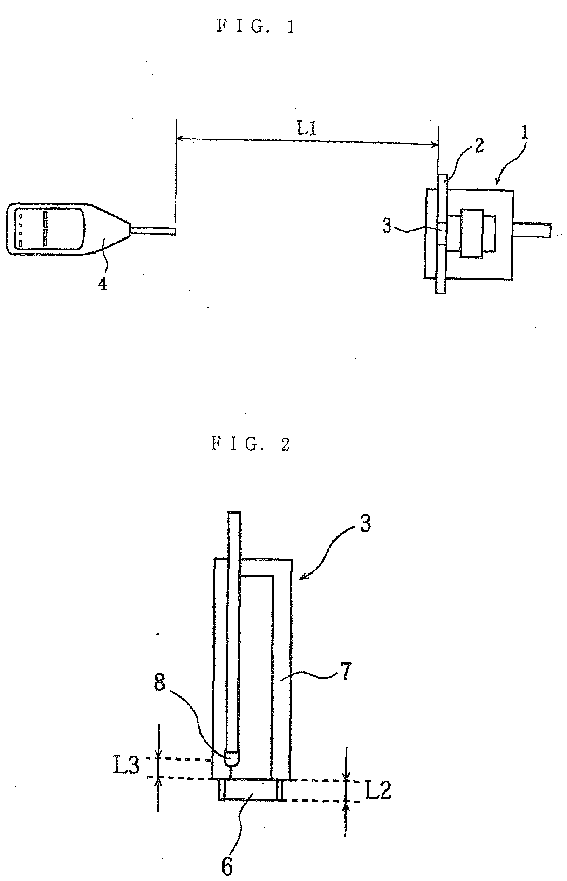

As illustrated in Fig. 1, noise level was measured while the distance L1 between a carbon brush 3 and a noise level meter 4 was set at 50 cm. In Fig. 1, reference numeral 1 denotes a motor, and reference numeral 2 denotes a commutator.

### - Method of Measuring Brush Temperature

As illustrated in Fig. 2, measurement was conducted while the distance L3 from the boundary position between a brush main body 6 and a brush holder 7 to a thermocouple 8 was set at 2 mm. The exposed length L2 of the brush main body 6 was set at 2 mm.

As clearly seen from Fig. 3, it is observed that the present invention brush A showed a noise level about 5 dB lower than the comparative brush Z. Moreover, as clearly seen from Fig. 4, it is observed that the present invention brush A showed a brush temperature of 10°C to 20°C lower than the comparative brush Z.

### (Other Embodiments)

(1) Although the proportion of the oil was set at 5 weight % in the impregnation solution, this is merely illustrative. However, it is desirable that the proportion be from 1 weight % to 30 weight %. The reason why it is preferable to limit the proportion to this range is as follows. If the proportion is less than 1 weight %, the proportion of the oil is so low that the lubricity may not be improved sufficiently. On the other hand, if the proportion exceeds 30 weight %, the viscosity of the impregnation solution becomes so high that a sufficient amount of the impregnation solution may not be impregnated into the pores.
   When the impregnation solution is restricted to have such a proportion, the proportion of the suspension can be easily restricted to from 0.5 weight % to 6 weight % with respect to the carbon block substrate when the impregnation solution is impregnated into the pores in the carbon block substrate and thereafter excessive petroleum-based solvent is removed to impregnate the suspension into the pores.
(2) The petroleum-based solvent is not limited to the one described above. Examples thereof include isobutyl alcohol, isopentyl alcohol, ethylene glycol monoethyl ether, ethylene glycol monomethyl ether, chlorobenzene, isobutyl acetate, n-butyl acetate, n-propyl acetate, 1,4-dioxane, tetrachloroethylene, toluene, 1-butanol, methyl isobutyl ketone, and methyl normal butyl ketone, which have a boiling point of 90°C or higher. Preferable examples include ethylene glycol monoethyl ether acetate, ethylene glycol mono-n-butyl ether, o-dichlorobenzene, cresol, isopentyl acetate, n-pentyl acetate, cyclohexanol, cyclohexanone, N,N-dimethylformamide, styrene, methylcyclohexanol, methylcyclohexanone, petroleum naphtha, and mineral spirit, which have a boiling point of 140°C or higher. It is, however, desirable that the petroleum-based solvent have a boiling point of from 90°C to 250°C (particularly from 140°C to 250°C), be capable of cleaning oil away and dissolving oil, and moreover have low odor. This means that more preferable examples include ethylene glycol monoethyl ether acetate, ethylene glycol mono-n-butyl ether, petroleum naphtha, and mineral spirit. Among them, ones having a vapor pressure of 1 kPa or lower at 20°C are still more preferable. The just-mentioned four kinds of solvents generally have a vapor pressure of 1 kPa or lower, but if there are variations owing to their types, it is preferable to select a type having a vapor pressure of 1 kPa or lower.
(3) Examples of the oil include a wax, and an oil to which a thickening agent is added. It is also possible that an additive agent for improving lubricity may be added thereto.

Suitable examples of the oil include greases, and particularly suitable are high-temperature adaptable-types of greases that use bentonite clay or the like as a thickening agent. Suitable examples of the wax include mineral-based wax such as montan wax, petroleum-based wax such as paraffin wax, synthetic wax, polyethylene-based wax, and stearic acid.

Examples of the thickening agent include kaolinite and halloysite, in addition to the above-mentioned bentonite clay.

Furthermore, examples of the addition agent for improving lubricity include tungsten disulfide, boron nitride, graphite fluoride, bismuth oxide, cobalt oxide, nickel oxide, manganese oxide, chromium oxide, antimony oxide, aluminum oxide, silicon oxide, and tin oxide, in addition to the above-mentioned molybdenum disulfide.

### INDUSTRIAL APPLICABILITY

The present invention is applicable to, for example, commutator motors for washing machines and motors for power tools.

### REFERENCE SIGNS LIST

- 1: Motor
- 2: Commutator
- 3: Carbon brush
- 4: Noise level meter
- 6: Brush main body
- 7: Brush holder
- 8: Thermocouple

## Claims

1. A carbon brush (3) comprising a carbon block substrate having pores in a surface and an inner portion thereof, the carbon brush making sliding contact with a commutator (2) provided in a motor (1), **characterized by** including:
a suspension comprising an oil in solid form or in semi-solid form, the oil being suspended in a petroleum-based solvent having a boiling point higher than a temperature of the carbon brush at a time of operation of the motor, the suspension existing in the pores.

2. The carbon brush according to claim 1, wherein the proportion of the suspension is from 0.5 weight % to 6 weight % with respect to the carbon block substrate.

3. The carbon brush according to claim 1 or 2, wherein the proportion of the oil is from 3 weight % to 60 weight % with respect to the total amount of the suspension.

4. The carbon brush according to any one of claims 1 through 3, wherein the petroleum-based solvent has a boiling point of from 140°C to 250°C.

5. The carbon brush according to any one of claims 1 through 4, wherein the petroleum-based solvent has a vapor pressure of 1 kPa or lower at 20°C.

6. The carbon brush according to any one of claims 1 through 5, wherein the oil is in semi-solid form.

7. The carbon brush according to claim 6, wherein the oil comprises a grease.

## Patentansprüche

1. Kohlebürste (3) mit einem Kohlenstoffblock-Substrat mit Poren in seiner Oberfläche und einem inneren Teil, wobei die Kohlebürste einen Gleitkontakt mit einem Kommutator (2) hat, der in einem Motor (1) vorgesehen ist, **gekennzeichnet durch**:
eine Suspension mit einem Öl in fester Form oder halbfester Form, wobei das Öl in einem Petroleum-basierten Lösungsmittel suspendiert ist, das einen Siedepunkt aufweist, der höher ist als eine Temperatur der Kohlebürste beim Betrieb des Motors, wobei die Suspension in den Poren vorhanden ist.

2. Kohlebürste nach Anspruch 1, wobei der Anteil der Suspension 0,5 Gewichtsprozent bis 6 Gewichtsprozenten mit Bezug auf das Kohlenstoffblock-Substrat beträgt.

3. Kohlebürste nach Anspruch 1 oder 2, wobei der Anteil des Öls von 3 Gewichtsprozenten bis 60 Gewichtsprozenten mit Bezug auf die Gesamtmenge der Suspension beträgt.

4. Kohlebürste nach einem der Ansprüche 1 bis 3, wobei das Petroleum-basierte Lösungsmittel einen Siedepunkt von 40 °C bis 250 °C aufweist.

5. Kohlebürste nach einem der Ansprüche 1 bis 4, wobei das Petroleum-basierte Lösungsmittel einen Dampfdruck von 1 kPa oder weniger bei 20 °C aufweist.

6. Kohlebürste nach einem der Ansprüche 1 bis 5, wobei das Öl in halbfester Form vorliegt.

7. Kohlebürste nach Anspruch 6, wobei das Öl ein Fett umfasst.

## Revendications

1. Balai de carbone (3) comprenant un substrat sous forme de bloc de carbone pourvu de pores dans une surface et une partie interne de celui-ci, le balai de carbone étant en contact coulissant avec un commutateur (2) présent dans un moteur (1), **caractérisé en ce qu'**il comprend :
une suspension comprenant une huile sous forme solide ou sous forme semi-solide, l'huile étant en suspension dans
un solvant à base de pétrole ayant un point d'ébullition supérieur à une température du balai de carbone à un moment du fonctionnement du moteur, la suspension étant présente dans les pores.

2. Balai de carbone selon la revendication 1, dans lequel la proportion de la suspension est de 0,5 % en poids à 6 % en poids relativement au substrat sous forme de bloc de carbone.

3. Balai de carbone selon la revendication 1 ou 2, dans lequel la proportion de l'huile est de 3 % en poids à 60 % en poids relativement à la quantité totale de la suspension.

4. Balai de carbone selon l'une quelconque des revendications 1 à 3, dans lequel le solvant à base de pétrole a un point d'ébullition de 140 °C à 250 °C.

5. Balai de carbone selon l'une quelconque des revendications 1 à 4, dans lequel le solvant à base de pétrole a une tension de vapeur de 1 kPa ou moins à 20 °C.

6. Balai de carbone selon l'une quelconque des revendications 1 à 5, dans lequel l'huile est sous forme semi-solide.

7. Balai de carbone selon la revendication 6, dans lequel l'huile comprend une graisse.
